(19) Europäisches Patentamt
European Patent Office
Office européen des brevets

(11) Veröffentlichungsnummer: **0 262 091**
**A2**

(12) # EUROPÄISCHE PATENTANMELDUNG

(21) Anmeldenummer: **87810523.8**

(22) Anmeldetag: **14.09.87**

(51) Int. Cl.[4]: **C 08 F 8/06**
C 08 L 45/00, H 01 B 1/12

(30) Priorität: **19.09.86 CH 3757/86**

(43) Veröffentlichungstag der Anmeldung:
**30.03.88 Patentblatt 88/13**

(84) Benannte Vertragsstaaten:
**CH DE FR GB IT LI NL**

(71) Anmelder: **CIBA-GEIGY AG**
**Klybeckstrasse 141**
**CH-4002 Basel (CH)**

(72) Erfinder: **Tieke, Bernd, Dr.**
**Oberdorf 434**
**CH-1711 Giffers (CH)**

(54) **Dehydriertes Polycyclopentadien.**

(57) Dehydriertes, in organischen Lösungsmitteln unlösliches Polycyclopentadien mit einer spezifischen Leitfähigkeit von mindestens $10^{-7}$ S•cm$^{-1}$, enthaltend im wesentlichen die wiederkehrenden Struktureinheiten der Formeln III bis VIII

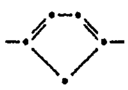 (III), 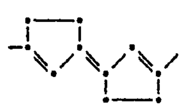 (IV),

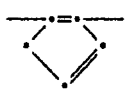 (V), 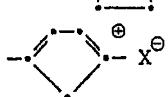 (VI),

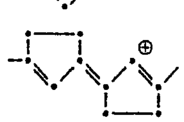 (VII) und 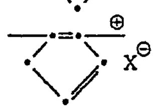 (VIII),

worin X- für ein von Jod, einem Metall- oder Metalloidpentahalogenid abgeleitetes Anion steht, wird durch Behandeln von Polycyclopentadien mit Jod, einem Metall- oder Metalloidpentahalogenid erhalten und kann als elektrisch leitfähiger Werkstoff zur Herstellung von beispielsweise Leitern, Elektroden, Batterien oder Halbleiterbauteilen verwendet werden.

EP 0 262 091 A2

**Beschreibung**

Dehydriertes Polycyclopentadien

Die vorliegende Erfindung betrifft dehydriertes, in organischen Lösungsmitteln unlösliches Polycyclopentadien mit einer spezifischen Leitfähigkeit von mindestens $10^{-7}$ S•cm$^{-1}$, Verfahren zu dessen Herstellung durch Behandeln von Polycyclopentadien mit Jod oder bestimmten Lewissäuren, wie Metall- oder Metalloidpentahalogeniden, sowie dessen Verwendung.

Polycyclopentadien ist literaturbekannt und besteht überwiegend aus Einheiten der Formel I und zu geringem Masse auch aus Einheiten der Formel II.

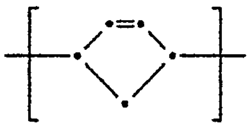 (I) und 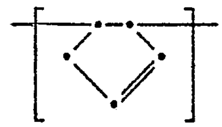 (II)

Die Herstellung eines elektrisch leitfähigen Polymeren durch Umsetzung von Polycyclopentadien mit Brom ist aus Journal of Polymer Science, Part C, No. 4, Seiten 1335 bis 1346, bekannt. Sowohl die Stabilität des auf diese Weise dehydrierten Polycyclopentadiens an der Luft als auch die Langzeitstabilität seiner elektrischen Leitfähigkeit sind ungenügend.

In Polymer Preparation ACS. Div. Polym. Chem., 7(2), 616 (1966), wird berichtet, dass beim Behandeln von Polycyclopentadien mit Protonensäure oder Lewissäure die im Polymer enthaltenen isolierten Doppelbindungen zum Teil in konjugierte Doppelbindungen übergehen.

Als Lewissäuren werden $SbCl_3$ und $TiCl_4$ eingesetzt. Ferner ist aus Journal Chem. Soc., 1961, Seiten 1953 - 1963 und aus Journal of Polymer Science, Part A - 1, Vol. 5, (1967), Seite 395, bekannt, dass farbloses Cyclopentadien in Gegenwart von Trichloressig-bzw. Trifluoressigsäure katalytisch in ein tiefgefärbtes, in organischen Lösungsmitteln unlösliches Polymer umgewandelt werden kann. Angaben über die elektrische Leitfähigkeit dieser Polymere fehlen in der Literatur. Eigene Versuche haben aber gezeigt, dass das nach diesen Verfahren erhaltene dehydrierte Polycyclopentadien für Anwendungen als elektrischer Werkstoff an der Luft eine ungenügende Langzeitstabilität bezüglich seiner elektrischen Eigenschaften aufweist.

Es wurde nun gefunden, dass man durch Behandeln von Polycyclopentadien mit Jod, Metall- oder Metalloidpentahalogeniden dehydriertes Polycyclopentadien erhält, das in organischen Lösungsmitteln unlöslich ist und sich durch eine bessere elektrische Leitfähigkeit und bessere Langzeitstabilität der Leitfähigkeit an der Luft auszeichnet.

Gegenstand vorliegender Erfindung ist somit dehydriertes, in organischen Lösungsmitteln unlösliches Polycyclopentadien mit einer spezifischen Leitfähigkeit von mindestens $10^{-7}$ S•cm$^{-1}$, enthaltend im wesentlichen die wiederkehrenden Struktureinheiten der Formeln III bis VIII

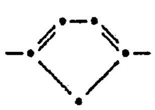 (III), 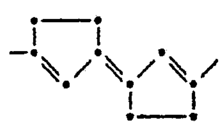 (IV), 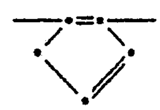 (V),

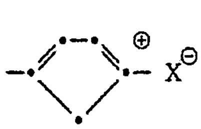 (VI), 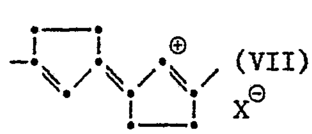 (VII) und 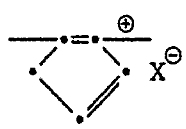 (VIII),

worin $X^{\ominus}$ für ein von Jod, einem Metall- oder Metalloidpentahalogenid abgeleitetes Anion steht.

Vorzugsweise stellt $X^-$ in den Formeln VI bis VIII ein Jodidion oder ein Anion der Formeln $SbCl_6^-$, $SbF_6^-$, $AsF_6^-$, oder $PF_6^-$ dar, insbesondere ein Jodidion.

Dehydriertes, in organischen Lösungsmitteln unlösliches Polycyclopentadien mit einer spezifischen Leitfähigkeit von mindestens $10^{-7}$ S•cm$^{-1}$ und enthaltend die wiederkehrenden Struktureinheiten der Formeln III bis VIII kann erfindungsgemäss hergestellt werden, indem man Polycyclopentadien mit Jod, einem Metall- oder Metalloidpentahalogenid als Oxidationsmittel behandelt, wobei man mindestens 0,5 Mol $J_2$ oder mindestens 1 Mol eines Metall- oder Metalloidpentahalogenids pro Mol der im Polycyclopentadien enthaltenen Monomereinheit einsetzt.

Vorzugsweise setzt man mindestens 1 Mol $J_2$ oder mindestens 2 Mol eines Metall- oder Metalloidpentahalogenids und insbesondere mindestens 1,5 Mol $J_2$ oder mindestens 2,5 Mol eines Metall- oder Metalloidpentahalogenids pro Mol der im Polycyclopentadien enthaltenen Monomereinheit ein.

Setzt man beim erfindungsgemässen Verfahren pro Mol Monomereinheit mehr als 0,5 Mol $J_2$ ein, so können als Anionen des Jods neben Jodidionen auch solche der Formel $J_z^-$ auftreten, worin z 3 oder eine ganze ungerade Zahl von grösser als 3 darstellt.

Geeignete Metall- und Metalloidpentahalogenide, welche beim erfindungsgemässen Verfahren eingesetzt werden können, sind beispielsweise $SbCl_5$, $SbF_5$, $AsCl_5$, $AsF_5$, $BiF_5$, $PF_5$, $PBr_5$ oder $PCl_5$. Vorzugsweise verwendet man beim erfindungsgemässen Verfahren als Oxidationsmittel Jod, $SbCl_5$, $SbF_5$, $AsF_5$ oder $PF_5$, insbesondere Jod.

Die beim erfindungsgemässen Verfahren zu verwendenden Metall- und Metalloidpentahalogenide sind bekannt und zum Teil im Handel erhältlich. Desgleichen sind Polycyclopentadien und Verfahren zu dessen Herstellung bekannt. Polycyclopentadien kann beispielsweise nach der in Polymer Preprints 4, Nr. 2, 82 (1983) beschriebenen Methode hergestellt werden, indem man Cyclopentadien unter Verwendung eines Ziegler-Natta-Katalysators (Triisobutylaluminium-Titaniumtetrachlorid) polymerisiert. Vorzugsweise setzt man beim erfindungsgemässen Verfahren ein Polycyclopentadien mit einem mittleren Molekulargewicht von $5 \cdot 10^2$ bis $10^6$ ein. Die Dehydrierung des Polycyclopentadiens kann sowohl in Lösung, wobei man als Lösungsmittel organische, mit den Oxidationsmitteln nichtreagierende Lösungsmittel, wie beispielsweise Tetrachlorkohlenstoff, Chloroform, Cyclohexan, 1,2-Dichlorethan, Benzol oder Toluol, einsetzt, oder in fester Form, beispielsweise als Film oder Beschichtung vorliegend, durchgeführt werden.

Das nach dem erfindungsgemässen Verfahren erhaltene dehydrierte Polycyclopentadien ist eine in organischen Lösungsmitteln unlösliche, feste, dunkel bis schwarz gefärbte Substanz mit einer elektrischen Leitfähigkeit von vorzugsweise mindestens $10^{-6}$ $S \cdot cm^{-1}$. Insbesondere weist das erfindungsgemässe, dehydrierte Polycyclopentadien eine elektrische Leitfähigkeit von mindestens $10^{-5}$ $S \cdot cm^{-1}$ auf.

Das erfindungsgemässe, dehydrierte Polycyclopentadien kann als elektrisch leitfähiger Werkstoff zur Herstellung von Leitern, Elektroden, Batterien, Schaltern, Halbleiterbauteilen, sowie bei der antistatischen Ausrüstung oder der elektromagnetischen Abschirmung von elektronischen Bauteilen eingesetzt werden.

In vorteilhafter Weise wird das dehydrierte Polycyclopentadien zusammen mit in organischen Lösungsmitteln löslichen Polymeren, vorzugsweise in Form von elektrisch leitenden Filmen oder Beschichtungen, als elektrisch leitfähiger Werkstoff verarbeitet.

Gegenstand vorliegender Erfindung sind somit auch Zusammensetzungen, enthaltend dehydriertes Polycyclopentadien und ein in einem organischen Lösungsmittel lösliches Polymer.

Solche Zusammensetzungen können beispielsweise hergestellt werden, indem man Mischungen aus Polycyclopentadien und einem in einem organischen Lösungsmittel löslichen Polymer, vorzugsweise zusammen in Form von Filmen oder Beschichtungen vorliegend, mit einem oben angegebenen Oxidationsmittel behandelt. Man kann aber auch dehydriertes Polycyclopentadien beispielsweise in Pulverform vorliegend, dem entsprechenden Polymer in der Schmelze oder in Form von Lösungen zugeben, um die Zusammensetzung zu erhalten.

Vorzugsweise enthalten die Zusammensetzungen mindestens 10 Gew.-%, insbesondere mindestens 25 Gew.-%, dehydriertes Polycyclopentadien, bezogen auf das Gesamtgewicht aus dehydriertem Polycyclopentadien und in organischen Lösungsmitteln löslichem Polymer, wie beispielsweise ein Phenylindanreste enthaltendes Polyimid.

Unter in organischen Lösungsmitteln löslichen Polymeren sind in Zusammenhang mit der vorliegenden Erfindung solche Polymere zu verstehen, die eine Löslichkeit von mindestens 10 g Polymer pro Liter organisches Lösungsmittel, vorzugsweise mindestens 20 g Polymer pro Liter organisches Lösungsmittel, aufweisen.

Vorzugsweise enthalten die erfindungsgemässen Zusammensetzungen als in organischen Lösungsmitteln lösliche Polymere ein Phenylindanreste enthaltendes Polyimid.

In organischen Lösungsmitteln lösliche, einen Phenylindanrest enthaltende Polyimide werden im DE-Patent 24 46 383 offenbart und bestehen im wesentlichen aus der wiederkehrenden Einheit der Formel

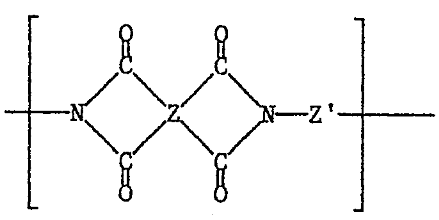

worin die vier Carbonylgruppen an verschiedene Kohlenstoffatome gebunden sind und je zwei Carbonylgruppen in ortho- oder peri-Stellung zueinander stehen,
Z einen vierwertigen Rest bedeutet, der mindestens einen aromatischen Ring enthält und
Z' einen zweiwertigen organischen Rest darstellt, ausgewählt unter aromatischen, aliphatischen, alkylaromatischen, cycloaliphatischen und heterocyclischen Resten, Kombinationen davon und Resten mit Sauerstoff, Schwefel, Stickstoff, Silicium oder Phosphor enthaltenden Brückengruppen
mit der Massgabe, dass

1) aus der Gesamtzahl der wiederkehrenden Polyimid-Einheiten

A) in 0 bis 100 Mol-% solche Einheiten Z einen Phenylindanrest der Strukturformel

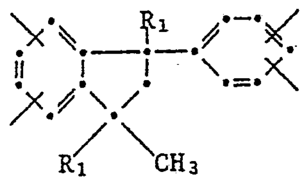

ist, worin $R_1$ Wasserstoff oder einen Alkylrest mit 1 bis 5 Kohlenstoffatomen bedeutet, und

B) in 0 bis 100 Mol-% solcher Einheiten Z' ein Phenylindanrest der Strukturformel

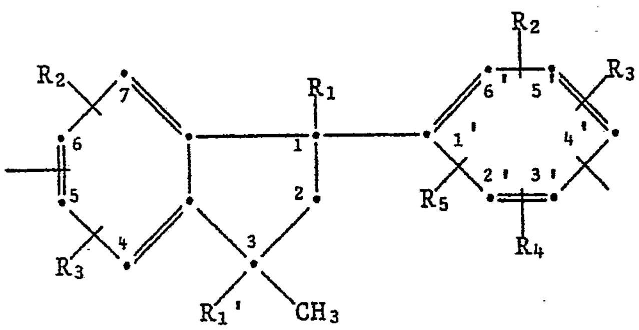

ist, worin

$R_1$ Wasserstoff oder eine Alkylgruppe mit 1 bis 5 Kohlenstoffatomen darstellt und

$R_2$, $R_3$, $R_4$ und $R_5$ unabhängig voneinander Wasserstoff, Halogen oder Alkylgruppen mit 1 bis 4 Kohlenstoffatomen bedeuten und

2) aus der Gesamtzahl der Reste Z und Z' mindestens 10 Mol-% Phenylindanreste sind.

Bezüglich der Herstellung und der bevorzugten Bereiche dieser Polyimide wird auf die Beschreibung dieser Patentschrift verwiesen.

Als organische Lösungsmittel für lösliche Polyimide, sind beispielsweise zu nennen: N,N-Dimethylformamid, N,N-Dimethylacetamid, N-Methyl-2-pyrrolidon, N,N-Dimethylformamid, N,N-Diethylacetamid, N-Methylcaprolactam, Dioxan, Dimethylsulfoxyd, Tetramethylharnstoff, Pyridin, Dimethylsulfon, Hexamethylphosphoramid, Tetramethylensulfon, Formamid, N-Methylformamid, γ-Butyrolacton, Tetrahydrofuran, m-Kresol, Phenol, 2-Methoxyethylacetat, 1,2-Dimethoxyethan, Bis-(2-methoxyethyl)ether, Chloroform, Nitrobenzol.

Die Lösungsmittel können allein oder in Kombination von Lösungsmitteln oder in Kombination mit Verdünnungsmitteln, wie Benzol, Benzonitril, Xylol, Toluol und Cyclohexan, verwendet werden.

Die erfindungsgemässen Zusammensetzungen eignen sich zur Herstellung selbsttragender, elektrisch leitfähiger Filme mit hoher Glasumwandlungstemperatur und Reissfestigkeit. Solche Filme können auf dem Gebiet der Elektronik bzw. der Mikroelektronik Anwendung finden, beispielsweise als leitfähige Verbundwerkstoffe bei der Herstellung von elektrischen Leitern, Elektroden, Batterien, Schaltern oder Halbleiterbauteilen, sowie bei der antistatischen Ausrüstung oder der elektromagnetischen Abschirmung von elektronischen Bauteilen.

Das in den folgenden Beispielen verwendete Polycyclopentadien (PCPD) wurde unter Verwendung von $TiCl_4$ als kationischem Initiator analog zur Arbeitsvorschrift für die Herstellung von Polyspiroheptadien in J. Polymer Sci. Polym. Chem. Ed. 11 (1973) 1917 synthetisiert.

Ausbeute: 74 % d.Th. Gehalt an 1,4-Einheiten $\geqq$ 99 % (NMR-spektroskopisch bestimmt). $[\eta] = 0{,}18$ (bestimmt in Toluol bei 30°C).

Elementaranalyse:

Gef. C = 89.77 %  Ber. C = 90.85 %

H = 9.03 %  H = 9.15 %

Beispiel 1: In einem Dreihalskolben mit Rührer, Rückflusskühler und Tropftrichter werden unter $N_2$ 0,66 g [10 mmol pro Monomereinheit] PCPD in 50 ml $CCl_4$ gelöst. In den Tropftrichter wird eine Lösung von 6,35 g [25 mmol] Jod in 250 ml $CCl_4$ gegeben. Unter Rühren wird nun bei konstant gehaltener Temperatur von 20°C die Jodlösung zugetropft. Nach kurzer Zeit entsteht ein violettschwarzer Niederschlag. Nach beendetem Zutropfen wird 18 Stunden unter Rühren am Rückfluss gekocht. Anschliessend wird abgekühlt und der Niederschlag in einer Stickstoff-Atmosphäre abgesaugt. Es wird noch dreimal mit je 50 ml $CCl_4$ nachgespült. Das Produkt wird im Hochvakuum bei 30°C getrocknet.

Es werden 2,15 g eines schwarzen, unlöslichen Pulvers erhalten.

Spezifische Leitfähigkeit, gemessen an einem Pulverpressling bei Raumtemperatur:

Nach 4 h $= 9{,}2 \times 10^{-6}$ S•cm$^{-1}$;

Nach 10 Tagen $= 1{,}4 \times 10^{-5}$ S•cm$^{-1}$.

Elementaranalyse: Gefunden C: = 30,97 %, H = 2.89 %;

J = 65.77 %.

Beispiel 2: Es wird wie in Beispiel 1 verfahren. In Abänderung werden 1,65 g [25 mmol pro Monomereinheit] PCPD in 50 ml $CCl_4$ und 6,35 g [25 mmol] Jod in 250 ml $CCl_4$ eingesetzt.

Es werden 4,22 g eines schwarzen, unlöslichen Pulvers erhalten Spezifische Leitfähigkeit, gemessen an einem Pulverpressling bei Raumtemperatur:

Nach 40 h = $6,7 \times 10^{-9}$ $S \bullet cm^{-1}$;

Nach 11 Tagen = $6,0 \times 10^{-9}$ $S \bullet cm^{-1}$.

Elementaranalyse:

Gefunden: C = 40,78 %, H = 3,52 %, J = 50,61 %.

Beispiel 3: Es wird wie Beispiel 1 verfahren. In Abänderung werden 1,32 g [20 mmol pro Monomereinheit] PCPD in 150 ml $CCl_4$ gelöst und 11,96 g [40 mmol] $SbCl_5$ in 15 ml $CCl_4$ zugetropft.

Es werden 4,26 g eines schwarzen, unlöslichen Pulvers erhalten.

Spezifische Leitfähigkeit, gemessen an einem Pulverpressling bei Raumtemperatur:

Nach 20 h = $3,1 \times 10^{-6}$ $S \bullet cm^{-1}$;

Nach 10 Tagen = $2,3 \times 10^{-5}$ $S \bullet cm^{-1}$.

Elementaranalyse: Gefunden C = 28.02 %, H = 2.16 %, Sb = 30,70 %, Cl = 36,14 %.

Beispiel 4: In einem gut getrockneten, mit Argon gespülten 700 ml-Gefäss, das mit einem Rührer ausgerüstet ist, werden 1,0 g $J_2$-Kristalle vorgelegt. In das Gefäss werden nun mit PCPD beschichtete Glasträger gegeben (Filmdicke ca. 1 µm). Die Beschichtung erfolgte durch Spin-Coating (Konzentration der PCPD-Lösung: 0,1 mg/ml Toluol; Drehgeschwindigkeiten: 30 sec bei 1200 U/min. und anschliessend 30 sec. bei 3000 U/min).

Die PCPD-Filme nehmen nach etwa 3 h eine braunrote Farbe an. Nach ca. 24 h sind sie völlig schwarz und weisen eine bläulich-metallische Reflektion auf.

Gewichtszunahme (nach 48 h): 2,98 mg Jod/mg Polymer.

Spezifische Leitfähigkeit, gemessen an einem Pulverpressling bei Raumtemperatur:

Nach 48 h; $3,1 \times 10^{-5}$ S $cm^{-1}$.

## Patentansprüche

1. Dehydriertes, in organischen Lösungsmitteln unlösliches Polycyclopentadien mit einer spezifischen Leitfähigkeit von mindestens $10^{-7}$ $S \bullet cm^{-1}$, enthaltend im wesentlichen die wiederkehrenden Struktureinheiten der Formeln III bis VIII

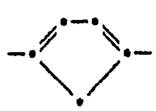 (III), 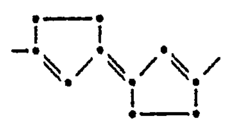 (IV), 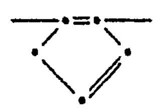 (V),

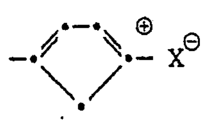 (VI), 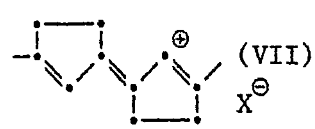 (VII) und 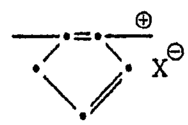 (VIII),

worin $X^\ominus$ für ein von Jod, einem Metall- oder Metalloidpentahalogenid abgeleitetes Anion steht.

2. Dehydriertes Polycyclopentadien gemäss Anspruch 1, worin X- in den Formeln VI bis VIII für ein Jodidion oder $SbCl_6^-$, $SbF_6^-$, $AsF_6^-$ oder $Pf_6^-$ steht.

3. Verfahren zur Herstellung von dehydriertem, in organischen Lösungsmitteln unlöslichem Polycyclopentadien mit einer spezifischen Leitfähigkeit von mindestens $10^{-7}$ $S \bullet cm^1$ und enthaltend im wesentlichen die wiederkehrenden Strukturelemente der Formeln III bis VIII gemäss Anspruch 1 durch Behandeln von Polycyclopentadien mit einem Oxidationsmittel, dadurch gekennzeichnet, dass man pro Mol der im Polycyclopentadien enthaltenen Monomereinheit mindestens 0,5 Mol $J_2$ oder mindestens 1 Mol eines Metall- oder Metalloidpentahalogenides als Oxidationsmittel einsetzt.

4. Verfahren gemäss Anspruch 3, dadurch gekennzeichnet, dass man pro Mol der im Polycyclopentadien enthaltenen Monomereinheit mindestens 1 Mol $J_2$ oder mindestens 2 Mol eines Metall- oder Metalloidpentahalogenids einsetzt.

5. Verfahren gemäss Anspruch 3, dadurch gekennzeichnet, dass man als Oxidationsmittel Jod, $SbCl_5$, $SbF_5$, $AsF_5$ oder $PF_5$ verwendet.

6. Zusammensetzung, enthaltend ein dehydriertes Polycyclopentadien gemäss Anspruch 1 und ein in organischen Lösungsmitteln lösliches Polymer.

7. Zusammensetzungen gemäss Anspruch 6, dadurch gekennzeichnet, dass das in organischen Lösungsmitteln lösliche Polymer ein Phenylindanreste enthaltendes Polyimid ist.

8. Zusammensetzungen, gemäss Anspruch 6, dadurch gekennzeichnet, dass das in organischen Lösungsmitteln lösliche Polymer ein Polyimid ist, worin mindestens 10 Mol % der wiederkehrenden

Struktureinheiten einen Phenylindanrest enthalten.